(19) **Europäisches Patentamt / European Patent Office / Office européen des brevets**

(11) **EP 3 980 217 B1**

(12) **EUROPÄISCHE PATENTSCHRIFT**

(45) Veröffentlichungstag und Bekanntmachung des Hinweises auf die Patenterteilung:
**15.01.2025   Patentblatt 2025/03**

(21) Anmeldenummer: **20730245.6**

(22) Anmeldetag: **02.06.2020**

(51) Internationale Patentklassifikation (IPC):
**B23K 26/352** *(2014.01)*        **B23K 26/067** *(2006.01)*
**B23K 26/06** *(2014.01)*         **B23K 26/0622** *(2014.01)*
**B23K 26/03** *(2006.01)*

(52) Gemeinsame Patentklassifikation (CPC):
**B23K 26/355; B23K 26/032; B23K 26/0608;
B23K 26/0622; B23K 26/0652; B23K 26/0676**

(86) Internationale Anmeldenummer:
**PCT/EP2020/065190**

(87) Internationale Veröffentlichungsnummer:
**WO 2020/245104 (10.12.2020 Gazette 2020/50)**

(54) **ANORDNUNG ZUR ÜBERWACHUNG VON LASERSTRUKTURIERUNGSPROZESSEN, DIE AN OBERFLÄCHEN VON BAUTEILEN DURCHGEFÜHRT WERDEN**

ARRANGEMENT FOR MONITORING LASER STRUCTURING PROCESSES WHICH ARE CARRIED OUT ON SURFACES OF COMPONENTS

ENSEMBLE DE SURVEILLANCE DE PROCÉDÉS DE STRUCTURATION PAR LASER, QUI SONT EXÉCUTÉS SUR DES SURFACES DE COMPOSANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **04.06.2019   DE 102019208106**

(43) Veröffentlichungstag der Anmeldung:
**13.04.2022   Patentblatt 2022/15**

(73) Patentinhaber: **Fraunhofer-Gesellschaft zur Förderung
der angewandten Forschung e.V.
80686 München (DE)**

(72) Erfinder:
• **ALAMRI, Sabri**
  **01277 Dresden (DE)**
• **KUNZE, Tim**
  **01277 Dresden (DE)**
• **AGUILAR MORALES, Alfredo Ismael**
  **01277 Dresden (DE)**

(74) Vertreter: **Pfenning, Meinig & Partner mbB
Patent- und Rechtsanwälte
An der Frauenkirche 20
01067 Dresden (DE)**

(56) Entgegenhaltungen:
WO-A1-2019/134769        DE-A1- 102017 214 736
DE-B3- 102018 200 036        US-A1- 2010 258 544
US-A1- 2016 167 165

**Beschreibung**

Die Erfindung betrifft eine Anordnung zur Überwachung von Laserstrukturierungsprozessen, insbesondere von direkten Laserinterferenzstrukturierungsprozessen, die an Oberflächen von Bauteilen durchgeführt werden.

Es sind verschiedenste optische Anordnungen bekannt, mit denen das Verfahren der direkten Laserinterferenzstrukturierung (DLIP) durchgeführt werden kann. Dabei können sehr kleine und filigrane Strukturen mit definierter Strukturperiode Λ durch Werkstoffabtrag oder eine Modifizierung von Werkstoff ausgebildet werden.

Das Problem der Überwachung des Strukturierungsprozesses, bei dem eine ausreichend genaue Erfassung der Position der jeweiligen Struktur oder der Dimensionierung der Strukturelemente, mit denen die jeweilige Struktur ausgebildet wird, während des Strukturierungsprozesses ist aber nur unzureichend gelöst.

So wurde versucht mit einem zusätzlichen Strahlteiler, der im Strahlengang eines Laserstrahls angeordnet und mit dem ein Teilstrahl auf einen Sensor einer Abbildungseinrichtung gerichtet wurde, eine Regelung vorzunehmen. Dies hat aber den Nachteil, dass ein Teil der Laserstrahlung nicht für den Strukturierungsprozess genutzt werden kann, was den Wirkungsgrad reduziert. Außerdem ist eine sehr genaue aufwändige Positionierung des Sensors erforderlich.

Bei einer anderen versuchten Möglichkeit wurde ein optischer Sensor vom Laserstrahl entkoppelt angeordnet, um Laserverluste zu vermeiden. Dazu wurde ein ringförmiges optisches fokussierendes Element im Strahlengang angeordnet. Durch das ringförmige optische Element kann der Laserstrahl dieses ringförmige optische Element unbeeinflusst passieren. Reflektierte Laserstrahlung kann so für eine Detektion gesammelt werden. Ein solcher optischer Aufbau ist aber ebenso aufwändig bei der Justierung und man kann kein kompaktes System zur Durchführung des Prozesses nutzen.

Bei einer Anordnung mehrerer Detektoren in Reihe neben der optischen Anordnung für die direkte Laserinterferenzstrukturierung kann nur gebrochene Laserstrahlung detektiert werden und es ist ebenfalls kein kompakter Aufbau möglich.

So ist aus DE 10 2018 200 036 B3 (Basis für den Oberbegriff von Anspruch 1) eine optische Anordnung zur direkten Laserinterferenzstrukturierung bekannt.

US 2010/0258544 A1 betrifft ein Verfahren zur Entfernung von Material.

Es ist daher Aufgabe der Erfindung, Möglichkeiten für eine definierte Beeinflussung des Prozesses einer Laserstrukturierung, insbesondere der direkten Laserinterferenzstrukturierung und dabei der Ausbildung von definierten Strukturen während des Strukturierungsprozesses anzugeben, die eine ausreichende Genauigkeit, einen geringen Justageaufwand erfordert und einen kompakten Aufbau einer dafür ausgelegten Anordnung ermöglicht.

Erfindungsgemäß wird diese Aufgabe mit einer Anordnung, die die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Die erfindungsgemäße Anordnung zur direkten Laserinterferenzstrukturierung auf Oberflächen von Bauteilen ist mit einer Anordnung optischer Elemente, die so ausgebildet ist, dass ein von einer Laserstrahlungsquelle emittierter Laserstrahl in mindestens zwei Teilstrahlen aufgeteilt wird und die mindestens zwei Teilstrahlen so auf die zu strukturierende Oberfläche eines Bauteils gerichtet werden, dass durch die Interferenz der mindestens zwei Teilstrahlen eine lokal definierte Struktur auf der jeweiligen Oberfläche des Bauteils mit vorgebbarer Strukturperiode Λ ausgebildet wird. Für eine solche Anordnung optischer Elemente kann man jede bekannte und/oder dafür geeignete Anordnung optischer Elemente, mit beispielsweise strahlteilenden, optisch brechenden und/oder reflektierenden optischen Elementen, einsetzen.

Außerdem ist ein optischer Detektor, der zur ortsaufgelösten Erfassung von Intensitäten von an der zu strukturierenden oder bereits zumindest teilweise strukturierten Oberfläche reflektierter Laserstrahlung oder von an der bereits zumindest teilweise strukturierten Oberfläche reflektierten und gebrochenen Laserstrahlung ausgebildet ist, Bestandteil der Anordnung optischer Elemente.

Der optische Detektor ist mit einer elektronischen Auswerte- und Regeleinheit verbunden. Dabei ist die elektronische Auswerte- und Regeleinheit ausgebildet, den Prozess der direkten Laserinterferenzstrukturierung in Abhängigkeit der ortsaufgelöst erfassten Intensitäten zu regeln.

Der optische Detektor kann mit einer Reihenanordnung oder einer Reihen- und Spaltenanordnung optisch sensitiver Elemente gebildet sein. Es ist auch der Einsatz einer HSI-Kamera mit der zusätzlich eine spektralaufgelöste Erfassung möglich ist, denkbar.

Die elektronische Auswerte- und Regeleinheit sollte so ausgebildet sein, Abweichungen von einer vorgegebenen Strukturperiode Λ in mindestens einer Achsrichtung, die Strukturtiefe, Homogenität und/oder eine Verkippung der ausgebildeten Struktur in mindestens eine Richtung zu erkennen und zu berücksichtigen. Dies betrifft bei der Homogenität insbesondere Modulationen oder Defekte.

Sie kann außerdem so ausgebildet sein, die Laserstrahlungsquelle, mechanische Achsen und/oder die Strukturperiode Λ zu regeln.

Vorteilhaft ist es auch, wenn der Detektor in die Anordnung optischer Elemente integriert oder mit den Elementen dieser Anordnung in einem Gehäuse gemeinsam angeordnet ist.

Der Detektor und/oder die elektronische Auswerte- und Regeleinheit können ausgebildet sein, eine Regelung der Fokussierung mit der der Laserstrahl und/oder die Teilstrahlen durchführen zu können.

Beim DLIP-Verfahren werden mindestens zwei Teilstrahlen eines in geeigneter Form geteilten Laserstrahls mit einem definierten Winkel α auf die jeweilige Bauteiloberfläche gerichtet, um durch ihre Interferenz ganz bestimmte Strukturelemente an definierten Positionen, mit vorgegebener Strukturperiode Λ der Strukturelemente ausgebildet, wenn die Energie der Teilstrahlen in der Interferenzzone ausreichend groß ist. Dabei kann ein Werkstoffabtrag überwiegend mittels Ablation oder aber auch eine lokal definierte Modifizierung von Bauteilwerkstoff, die bevorzugt zu einer lokal definierten Änderung des optischen Brechungsindex führt und dadurch Strukturen ausgebildet werden, vorgenommen werden.

Dabei wird der größte Teil der Strahlung der miteinander interferierenden Teilstrahlen absorbiert. Ein Teil davon wird aber in Richtung, aus der die Teilstrahlen auf die jeweilige Bauteiloberfläche emittiert werden, zurück reflektiert. Die optischen Achsen der miteinander interferierenden Teilstrahlen und die reflektierte oder die an der Struktur gebrochene und reflektierte Strahlung sollten dabei in einem Winkel zwischen 0° und 90°, bevorzugt zwischen 0° und 20° in Bezug zur Ebene der Oberfläche des Bauteils ausgerichtet sein.

Der bereits erwähnte optische Detektor sollte dabei in den Aufbau mit der Anordnung optischer Elemente integriert sein.

Die Erfindung kann, wie bereits angedeutet, in zwei verschiedenen Moden betrieben werden. Bei einem Modus wird nur von der strukturierten oder der bereits zumindest teilweise strukturierten Bauteiloberfläche reflektierte Strahlung auf den optischen Detektor gerichtet und für die Regelung berücksichtigt.

Wird in einem Modus detektiert, bei dem lediglich reflektierte Strahlung erfasst und für die Regelung genutzt wird, sollten die Teilstrahlen und reflektierte Strahlung mit einem gleichen Winkel α aber in anderen Richtungen ausgerichtet sein.

Mit der Erfindung können orts- und ggf. auch zeitaufgelöste Informationen über den Arbeitsabstand, die Prozessqualität und die ausgebildeten Strukturen erhalten und berücksichtigt werden.

Bei der Regelung kann die Leistung der Laserstrahlung, die Fokussierung der Teilstrahlen, die Strukturperiode Λ, ein gepulster Betrieb (Anzahl der Pulse, Pulslänge, Pausen zwischen einzelnen Pulsen), Vorschubgeschwindigkeit, und/oder Pulsüberlappung entsprechend Vorgaben angepasst werden.

Die ortsaufgelöst mit dem Detektor erfassten Intensitäten können in Bezug zur jeweiligen Position auf der strukturierten bzw. zu strukturierenden Bauteiloberfläche dargestellt, ausgewertet und bei der Regelung berücksichtigt werden.

Bei dem Modus, bei dem nur reflektierte Strahlung erfasst und berücksichtigt wird, können bei Zweistrahlinterferenz zwei Maximalwerte erkannt und dadurch Daten, die mit den jeweiligen Positionen korrelieren, erhalten werden.

So kann beispielsweise die Fokussierung automatisch durch Korrelation der Abstände der Maximalwerte der erfassten Intensitäten zur Position der Anordnung optischer Elemente für die jeweilige Probe angepasst werden.

Bei einer Asymmetrie der Positionen der Maximalwerte von erfassten Intensitäten kann diese einer unerwünschten Neigung der zu strukturierenden Bauteiloberfläche in Bezug zur Anordnung optischer Elemente zugeordnet und bei der Regelung berücksichtigt oder korrigiert werden.

Bei einem Modus, bei dem reflektierte und gebrochene Strahlung erfasst und berücksichtigt wird, kann mit ausreichender Energie der Teilstrahlen ein Interferenzmuster als Struktur, insbesondere infolge lokal definierter Ablation, in dem Bereich in dem die Teilstrahlen miteinander interferieren ausgebildet werden. Insbesondere bei Mehrfachpulsen oder großer Überdeckung der Teilstrahlen kann gebrochene und an der strukturierten Bauteiloberfläche reflektierte Strahlung erfasst und berücksichtigt werden. Die gebrochene Strahlung wird dabei mit dem Winkel $\alpha_D$ nach dem Brechungsgesetz

$$\alpha_D = \sin^{-1}\left(\sin \alpha_{in} - q * \lambda/\Lambda\right)$$

reflektiert. Dabei ist $\alpha_{in}$ der Einfallswinkel der Teilstrahlen, $\lambda$ ist die Wellenlänge der eingesetzten Laserstrahlung, $\Lambda$ die Strukturperiode der jeweiligen ausgebildeten Struktur und q die Brechungsordnung. Die gebrochene Strahlung wird zurück in die Richtung der einfallenden Teilstrahlen reflektiert und kann mit einem fokussierenden optischen Element der Anordnung optischer Elemente auf den optischen Detektor gerichtet werden.

Bei der Analyse der ortaufgelöst erfassten gebrochenen und reflektierten Strahlung kann nicht nur die Positionsinformation, wie beim Modus bei dem nur reflektierte Strahlung erfasst und berücksichtigt wird, erhalten werden. Zusätzlich kann man dabei Informationen über die jeweilige Strukturperiode Λ der ausgebildeten Struktur aus dem Abstand von Maximalwerten der mit dem Detektor ortaufgelöst erfassten gebrochenen und reflektierten Strahlung, sowie die Tiefe und/oder Qualität der ausgebildeten Struktur aus den Intensitäten der Maximalwerte erhalten.

Bei der Erfindung ist es auch vorteilhaft, dass man die zeitabhängige Entwicklung der jeweiligen Struktur auf der Bauteiloberfläche während der Durchführung des Verfahrens der direkten Laserinterferenzstrukturierung, wenn die miteinander interferierenden Teilstrahlen die jeweilige Struktur ausbilden, erkennt und bei der Regelung berücksichtigt. Dabei kann beispielsweise gezielt der Werkstoffabtrag an der Bauteiloberfläche lokal definiert geregelt werden. Außerdem, kann ein zeitversetztes Auftreffen der Teilstrahlen auf die jeweilige Oberfläche ebenso detektiert werden und deswegen durch optische Anpassungen minimiert werden.

Die Information der Intensität der reflektierten oder gebrochenen Strahlung kann insbesondere genutzt werden, um die Prozessparameter an die gewünschte Strukturqualität anzupassen. Zum Beispiel können periodische Unregelmäßigkeiten oder Modulationen in dem eingebrachten Interferenzmuster von sekundären Signalen detektiert und dementsprechend genutzt werden, um die Prozessparametern anpassen zu können.

Mit der Erfindung ist ein einfacher kompakter Aufbau möglich, bei dem keine zusätzlichen und ggf. extern anzuordnenden optischen Elemente, wie beispielsweise eine zusätzliche Beleuchtung der Bauteiloberfläche, erforderlich sind. Zusätzlich ist eine zeitaufgelöste Analyse der Prozessschritte und deren Berücksichtigung bei der Regelung möglich.

Nachfolgend soll die Erfindung beispielhaft näher erläutert werden.

Dabei zeigen:

Figur 1 in schematischer Form das Auftreffen zweier Teilstrahlen auf eine zu strukturierende Bauteiloberfläche und von dort in Richtung optischem Detektor zurück reflektierte Strahlung;

Figur 2 in schematischer Darstellung zwei in einem Interferenzbereich interferierende Teilstrahlen und von der strukturierten Oberfläche gebrochener und reflektierter Strahlung in zwei Ansichten;

Figur 3 in schematischer Darstellung, wie von einer strukturierten Bauteiloberfläche reflektierte Strahlen auf einen optischen Detektor auftreffen und ein Diagramm, das die mit dem optischen Detektor ortsaufgelöst erfassten Intensitäten widergibt;

Figur 4 in schematischer Darstellung, wie von einer strukturierten Bauteiloberfläche gebrochene und reflektierte Strahlen auf einen optischen Detektor auftreffen und ein Diagramm, das die mit dem optischen Detektor ortsaufgelöst erfassten Intensitäten widergibt und

Figur 5 ein Beispiel einer Anordnung optischer Elemente in einem Gehäuse mit einem optischen Detektor, der als Reihenanordnung optischer Sensoren, mit denen eine eindimensionale ortsaufgelöste Erfassung von Intensitäten möglich ist, ausgebildet ist.

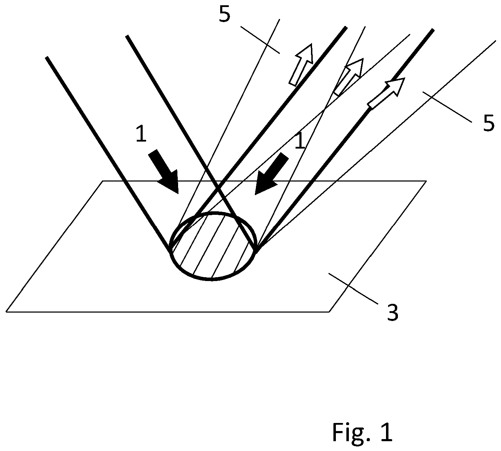

In Figur 1 ist gezeigt, wie zwei Teilstrahlen 1, die im Bereich der zu strukturierenden Oberfläche eines Bauteils 3 interferieren und dabei in einem Winkel $\alpha_{in}$ auf die Bauteiloberfläche auftreffen. Von dort reflektierte Laserstrahlung 5 wird in eine andere Richtung, nämlich auf den hier nicht dargestellten optischen Detektor 4 gerichtet.

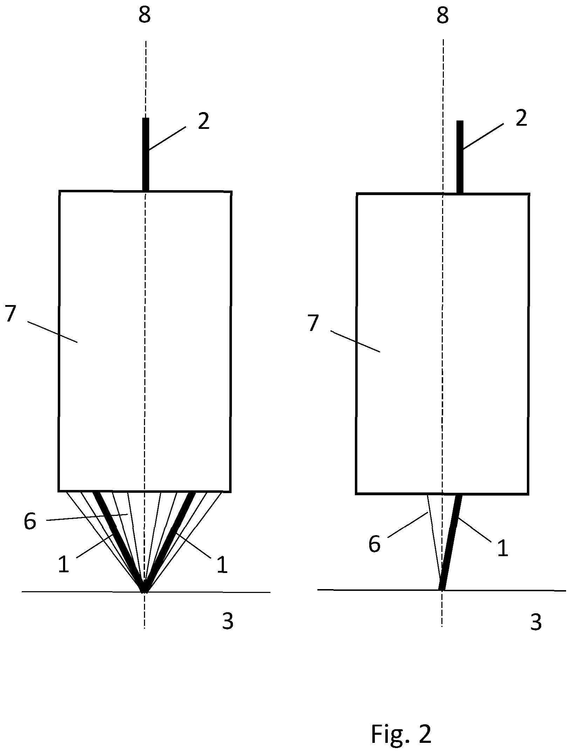

In Figur 2 ist in zwei Ansichten, nämlich einer Vorder- und einer Seitenansicht (rechts) gezeigt, wie zwei Teilstrahlen 1 auf die zu strukturierende oder bereits zumindest teilweise strukturierte Oberfläche des Bauteils 3 gerichtet sind und im Bereich der Oberfläche des Bauteils 3 miteinander interferieren.

An der strukturierten Bauteiloberfläche gebrochene und von dort reflektierte Laserstrahlung 6 trifft auf den im Gehäuse 7 angeordneten optischen Detektor 4 auf. Wie man Figur 2 entnehmen kann erfolgt die Bestrahlung mit den Teilstrahlen 1 und die Reflexion der gebrochenen und reflektierten Strahlung 6 in verschiedene Richtungen in Bezug zur optischen Achse 8.

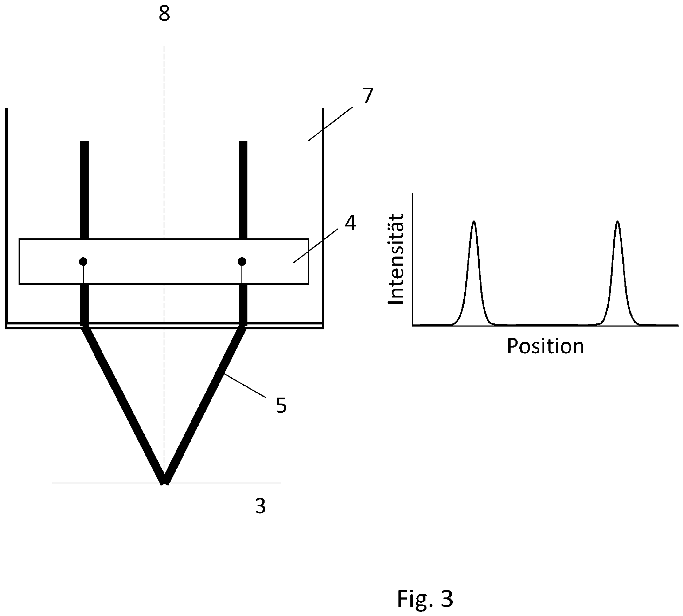

Figur 3 kann man entnehmen, wie von der zu strukturierenden Oberfläche reflektierte Strahlung 5 auf den optischen Detektor 4, der im Gehäuse 7 angeordnet und Bestandteil der Anordnung optischer Elemente 9 ist. Das Diagramm zeigt zwei mit dem optischen Detektor 4 erfasste Maximalwerte für die Intensität reflektierter Strahlung 5 an verschiedenen Positionen.

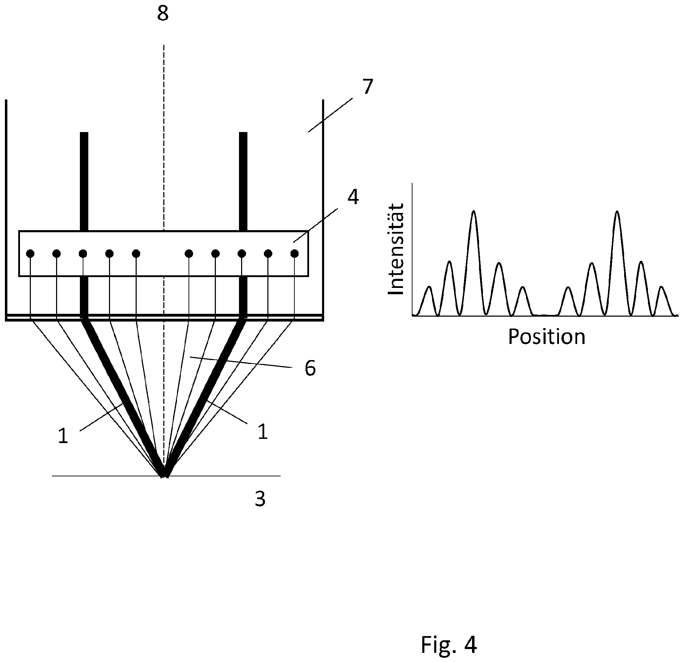

Figur 4 zeigt, wie an der zu strukturierenden Oberfläche gebrochene und von dort reflektierte Strahlung 6 auf den optischen Detektor 4, der im Gehäuse 7 angeordnet und Bestandteil der Anordnung optischer Elemente 9 ist. Das Diagramm zeigt zwei mit dem optischen Detektor 4 erfasste Maximalwerte für die Intensität reflektierter Strahlung 5 an verschiedenen Positionen.

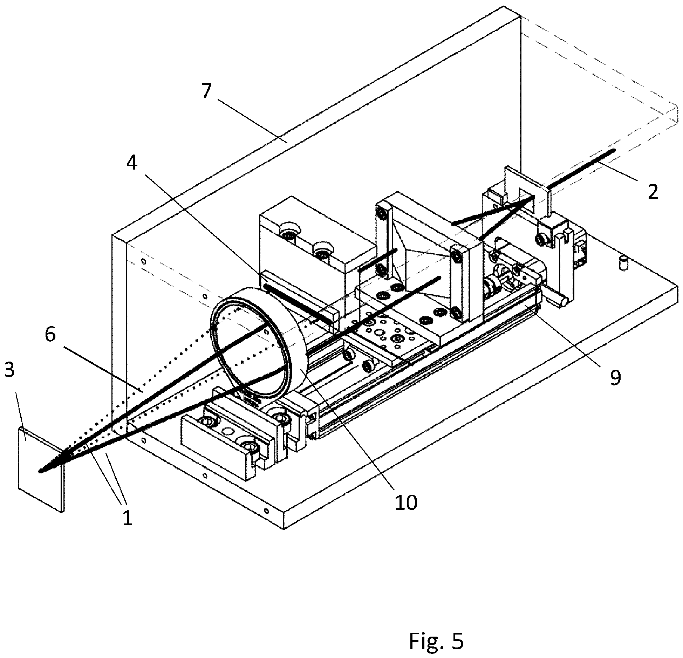

Figur 5 kann man entnehmen, wie ein von einer nicht dargestellten Laserstrahlungsquelle emittierter Laserstrahl 2 mittels der Anordnung optischer Elemente 9 in zwei Teilstrahlen 1 aufgeteilt und die Teilstrahlen 1 so auf die Oberfläche des Bauteils 3 gerichtet werden, dass sie dort miteinander interferieren. Die Teilstrahlen 1 werden dabei durch das Gehäuse 7 an dem optischen Detektor 4 vorbei und durch ein fokussierendes optisches Element 10 geführt.

Die von der zu strukturierenden oder strukturierten Bauteiloberfläche reflektierte Strahlung 5 ist durch das fokussierende optische Element 10 auf den optischen Detektor 4 gerichtet.

Mittels der ortsaufgelöst erfassten Intensitäten kann mit einer nicht dargestellten elektronischen Auswerte- und Regeleinheit, an die die mit dem optischen Detektor 4 ortsaufgelöst erfassten Intensitätsmesswerte übertragen werden, der Prozess der direkten Laserinterferenzstrukturierung geregelt werden.

**Patentansprüche**

1. Anordnung zur Überwachung von Laserstrukturierungsprozessen, die an Oberflächen von Bauteilen durchgeführt werden, mit einer Anordnung optischer Elemente (9), die so ausgebildet ist, dass ein von einer Laserstrahlungsquelle emittierter Laserstrahl (2) in mindestens zwei Teilstrahlen (1) aufgeteilt wird und die mindestens zwei Teilstrahlen (1) so auf die zu strukturierende Oberfläche eines Bauteils (3) gerichtet werden, dass durch die Interferenz der mindestens zwei Teilstrahlen eine lokal definierte Struktur auf der jeweiligen Oberfläche des Bauteils (3) mit vorgebbarer Strukturperiode Λ ausgebildet wird, **dadurch gekennzeichnet, dass**

ein optischer Detektor (4), der zur ortsaufgelösten Erfassung von Intensitäten von an der zu strukturierenden oder einer bereits teilweise strukturierten Bauteiloberfläche reflektierter Laserstrahlung (5) oder von an der bereits zumindest teilweise strukturierten Bauteiloberfläche reflektierten und gebrochenen Laserstrahlung (6) ausgebildet ist, Bestandteil der Anordnung optischer Elemente und

der optische Detektor (4) mit einer elektronischen Auswerte- und Regeleinheit verbunden ist; wobei

die elektronische Auswerte- und Regeleinheit ausgebildet ist, den Prozess der direkten Laserinterferenzstrukturierung in Abhängigkeit der ortsaufgelöst erfassten Intensitäten zu regeln.

2. Anordnung nach Anspruch 1, **dadurch gekennzeichnet, dass** der optische Detektor (4) mit einer Reihenanordnung oder einer Reihen- und Spaltenanordnung optisch sensitiver Elemente gebildet ist.

3. Anordnung nach einem der vorhergehenden Ansprüche, **dadurch gekennzeichnet, dass** im Strahlengang der von der zu strukturierenden oder bereits zumindest teilweise strukturierten Oberfläche reflektierten Laserstrahlung (5) oder der bereits zumindest teilweise strukturierten Oberfläche reflektierten und gebrochenen Laserstrahlung (6) und dem optischen Detektor (4) ein fokussierendes optisches Element (10) angeordnet ist.

4. Anordnung nach einem der vorhergehenden Ansprüche, **dadurch gekennzeichnet, dass** die elektronische Auswerte- und Regeleinheit ausgebildet ist, Abweichungen von einer vorgegebenen Strukturperiode Λ in mindestens einer Achsrichtung, die Strukturtiefe, Homogenität und/oder eine Verkippung der ausgebildeten Struktur in mindestens eine Richtung zu erkennen und zu berücksichtigen.

5. Anordnung nach einem der vorhergehenden Ansprüche, **dadurch gekennzeichnet, dass** die elektronische Auswerte- und Regeleinheit ausgebildet ist, eine orts- und zeitaufgelöste Analyse der Prozessschritte und deren Berücksichtigung bei der Regelung in Echtzeit durchzuführen.

6. Anordnung nach dem vorhergehenden Anspruch, **dadurch gekennzeichnet, dass** die elektronische Auswerte- und Regeleinheit ausgebildet ist, die Laserstrahlungsquelle, mechanische Achsen und/oder die Strukturperiode Λ zu regeln.

7. Anordnung nach einem der vorhergehenden Ansprüche, **dadurch gekennzeichnet, dass** der Detektor (4) in die Anordnung optischer Elemente (9) integriert oder mit den Elementen der Anordnung (9) in einem Gehäuse gemeinsam angeordnet ist.

8. Anordnung nach einem der vorhergehenden Ansprüche, **dadurch gekennzeichnet, dass** der Detektor (4) und/oder die elektronische Auswerte- und Regeleinheit ausgebildet ist, eine Regelung der Fokussierung des Laserstrahls und/oder der Teilstrahlen (2) durchzuführen.

## Claims

1. An arrangement for monitoring laser structuring processes, which are carried out on surfaces of components, with an arrangement of optical elements (9) configured such that a laser beam (2) emitted by a laser radiation source is split into at least two partial beams (1) and the at least two partial beams (1) are directed onto the surface of a component (3) to be structured, such that the interference of the at least two partial beams forms a locally defined structure on the respective surface of the component (3) with a predefinable structural period Λ,

**characterized in that**
an optical detector (4), which is configured for the spatially resolved detection of intensities of laser radiation (5) reflected by the component surface to be structured or an already partially structured component surface or laser radiation (6) reflected and refracted by the component surface that is already at least partially structured, is a component of the arrangement of optical elements and
the optical detector (4) is connected to an electronic evaluation and control unit; wherein
the electronic evaluation and control unit is configured to control the process of direct laser interference structuring as a function of the spatially resolved detected intensities.

2. The arrangement according to claim 1, **characterized in that** the optical detector (4) is formed by a row arrangement or a row and column arrangement of optically sensitive elements.

3. The arrangement according to any one of the preceding claims, **characterized in that** a focusing optical element (10) is arranged in the beam path of the laser radiation (5) reflected by the surface to be structured or already at least partially structured or the laser radiation (6) reflected and refracted by the already at least partially structured surface and the optical detector (4).

**4.** The arrangement according to any one of the preceding claims, **characterized in that** the electronic evaluation and control unit is configured to detect and take into account deviations from a predetermined structural period Λ in at least one axial direction, the structure depth, homogeneity and/or a tilting of the formed structure in at least one direction.

**5.** The arrangement according to any one of the preceding claims, **characterized in that** the electronic evaluation and control unit is configured to perform a real-time, spatially and temporally resolved analysis of the process steps and to take this into account in the control.

**6.** The arrangement according to the preceding claim, **characterized in that** the electronic evaluation and control unit is configured to control the laser radiation source, mechanical axes and/or the structural period Λ.

**7.** The arrangement according to any one of the preceding claims, **characterized in that** the detector (4) is integrated into the arrangement of optical elements (9) or is arranged together with the elements of the arrangement (9) in a housing.

**8.** The arrangement according to any one of the preceding claims, **characterized in that** the detector (4) and/or the electronic evaluation and control unit is configured to perform a control of the focusing of the laser beam and/or the partial beams (2).


**Revendications**

**1.** Ensemble de surveillance de processus de structuration par laser, qui sont exécutés sur des surfaces de composants, comprenant un ensemble d'éléments optiques (9), qui est conçu de telle sorte qu'un faisceau laser émis (2) par une source de rayonnement laser est divisé en au moins deux faisceaux partiels (1) et les au moins deux faisceaux partiels (1) sont orientés vers la surface à structurer d'un composant (3) de telle sorte que par l'interférence des au moins deux faisceaux partiels, une structure définie localement est formée sur la surface respective du composant (3) avec une période de structure Λ pouvant être définie,

   **caractérisé en ce que**
   un détecteur optique (4), qui est conçu pour la détection avec résolution spatiale d'intensités de rayonnement laser réfléchi (5) sur la surface de composant à structurer ou déjà partiellement structurée ou de rayonnement laser réfléchi et réfracté (6) sur la surface de composant déjà au moins partiellement structurée, fait partie de l'ensemble d'éléments optiques, et
le détecteur optique (4) est connecté à une unité d'évaluation et de réglage électronique ; dans lequel
l'unité d'évaluation et de réglage électronique est conçue pour régler le processus de structuration par interférence laser directe en fonction des intensités détectées avec résolution spatiale.

**2.** Ensemble selon la revendication 1, **caractérisé en ce que** le détecteur optique (4) est formé d'un ensemble de rangées ou d'un ensemble de rangées et de colonnes d'éléments optiquement sensibles.

**3.** Ensemble selon l'une quelconque des revendications précédentes, **caractérisé en ce qu'**un élément optique de focalisation (10) est agencé dans le trajet optique du rayonnement laser réfléchi (5) par la surface à structurer ou déjà au moins partiellement structurée, ou du rayonnement laser réfléchi et réfracté (6) par la surface déjà au moins partiellement structurée, et du détecteur optique (4).

**4.** Ensemble selon l'une quelconque des revendications précédentes, **caractérisé en ce que** l'unité d'évaluation et de réglage électronique est conçue pour reconnaître et prendre en compte les écarts par rapport à une période de structure Λ prédéterminée dans au moins une direction axiale, la profondeur de structure, l'homogénéité et/ou un basculement de la structure formée dans au moins une direction.

**5.** Ensemble selon l'une quelconque des revendications précédentes, **caractérisé en ce que** l'unité d'évaluation et de réglage électronique est conçue pour effectuer une analyse résolue en temps et en lieu des étapes de processus et leur prise en compte dans le réglage en temps réel.

**6.** Ensemble selon la revendication précédente, **caractérisé en ce que** l'unité électronique d'évaluation et de réglage est conçue pour régler la source de rayonnement laser, les axes mécaniques et/ou la période de structure Λ.

**7.** Ensemble selon l'une quelconque des revendications précédentes, **caractérisé en ce que** le détecteur (4) est intégré dans l'ensemble d'éléments optiques (9) ou est agencé avec les éléments de l'ensemble (9) dans un boîtier.

**8.** Ensemble selon l'une quelconque des revendications précédentes, **caractérisé en ce que** le détecteur (4) et/ou l'unité d'évaluation et de réglage électronique est conçue pour effectuer un réglage de la focalisation du faisceau laser et/ou des faisceaux partiels (1).

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018200036 B3
- US 20100258544 A1